# FASCICULE DE BREVET EUROPEEN

(11) **EP 2 723 627 B1**
(45) Date de publication et mention de la délivrance du brevet: **29.07.2015**
(21) Numéro de dépôt: 12731585.1
(22) Date de dépôt: 21.06.2012
(51) Int. Cl.: B62D 25/08, B62D 65/06, B60J 1/00, B62D 25/14, B60R 21/34

(54) **DISPOSITIF DE RENFORT DE LA TRAVERSE INFÉRIEURE DE BAIE POUR LA POSE D'UN PARE-BRISE DE VÉHICULE AUTOMOBILE**
VORRICHTUNG ZUR VERSTÄRKUNG DER UNTEREN QUERTRÄGER EINER ÖFFNUNG ZUM INSTALLIEREN EINER KRAFTFAHRZEUGSCHEIBE
DEVICE FOR REINFORCING THE BOTTOM CROSSBEAM OF AN OPENING FOR INSTALLING A MOTOR VEHICLE WINDSCREEN

(30) Priorité: 22.06.2011 FR 1155491
(43) Date de publication de la demande: 30.04.2014
(73) Titulaire: Renault S.A.S., 92100 Boulogne-Billancourt (FR)
(72) Inventeur: ANNETTE, Richard, F-78330 Fontenay Le Fleury (FR); RECLUS, Thierry, F-91700 Villiers sur Orge (FR)
(74) Mandataire: Renou, Jean-François
(86) Numéro de dépôt international: PCT/FR2012/051405
(87) Numéro de publication internationale: WO 2012/175877

(56) Documents cités:
- FR-A1- 2 697 335
- FR-A1- 2 928 335
- US-A1- 2011 068 607

## Description

La présente invention concerne un dispositif de renfort d'une traverse inférieure de baie du type présentant une partie supérieure flexible apte à se déformer et conçue pour recevoir une bordure inférieure d'un pare-brise de véhicule automobile appliquée à force sur ladite partie supérieure flexible lors de sa mise en place sur le véhicule automobile.

Les véhicules automobiles comprennent une caisse, qui présente une partie avant dans laquelle est logé un groupe motopropulseur, une partie arrière formant coffre et une partie centrale dans laquelle s'étend l'habitacle. La partie avant et la partie centrale sont séparées l'une de l'autre par un tablier transversal comprenant notamment une traversé inférieure de baie contre laquelle vient prendre appui une bordure inférieure du pare-brise. Afin d'assurer son rôle de soutien du pare-brise, la traverse inférieure de baie doit être suffisamment résistante. Aussi, elle est usuellement constituée d'une paroi avant transversale et d'une paroi arrière transversale associées l'une à l'autre, de manière à former un caisson transversal, ou corps creux, et présente une partie supérieure transversale de réception sur laquelle prend directement appui la bordure inférieure du pare-brise. La bordure inférieure du pare-brise est classiquement collée sur la partie supérieure transversale de réception de la traverse inférieure de baie par un joint de colle.

Dans un souci d'améliorer la sécurisation piétonne, les règles de sécurité ont conduit à faire évoluer la conception des zones d'appui du pare-brise et, en particulier, celle de la zone d'encollage en bordure inférieure du pare-brise au niveau de la partie supérieure de la traverse inférieure de baie. La partie supérieure de la traverse inférieure de baie peut ainsi être conçue pour présenter une flexibilité importante de manière à être déformable et à permettre, en cas de choc piéton, c'est-à-dire du mouvement relatif d'une personne vers le pare-brise du véhicule, que le pare-brise précisément puisse s'enfoncer de manière à dissiper une partie de l'énergie mécanique provoquée par le choc et ainsi préserver, autant que faire se peut, les parties vitales dudit piéton et notamment la tête.

Une telle conception de la structure de la traverse inférieure de baie pour la prise en compte du choc piéton interdit notamment la présence de pièces de renforts soudées qui, traditionnellement, contribuent au raidissement de la traverse inférieure de baie et garantissent la géométrie de la partie inférieure du pare-brise.

Une telle structure est connue du document US 2011/0068607 A1.

Or, l'atteinte de ces critères de sécurité se manifestant par une grande flexibilité de la partie supérieure de la traverse inférieure de baie, laquelle définissant la surface d'encollage en bordure inférieure du pare-brise, complique l'opération d'encollage du pare-brise, car les appuis de celui-ci en partie inférieure deviennent trop souples pour permettre une compression du joint de colle à la géométrie désirée. En outre, il existe un risque de fléchissement de la partie supérieure de la traverse inférieure de baie lors des opérations de dépose et de repose du pare-brise, qui n'est pas souhaitable.

Dans ce contexte, la présente invention a pour but de pallier les inconvénients précités et, en particulier, de fournir un dispositif de renfort d'une traverse inférieure de baie du type précité, qui tout en maintenant ses capacités de déformation requises par les nouvelles règles de sécurité relatives à la sécurisation piétonne, contribue à garantir une mise en place sûre et aisée du pare-brise lors des opérations de mise en place du pare-brise sur le véhicule automobile.

A cet effet, le dispositif de l'invention, par ailleurs conforme à la définition générique qu'en donne le préambule ci-dessus, est essentiellement caractérisé en ce qu'il comprend des moyens amovibles de raidissement de la traverse inférieure de baie comprenant au moins une première et une deuxième partie mobiles en coulissement l'une par rapport à l'autre entre une position rétractée et au moins une position déployée dans laquelle lesdites première et deuxième parties sont aptes à coopérer pour maintenir la partie supérieure flexible de la traverse inférieure de baie lors de l'application à force du pare-brise.

Selon un mode de réalisation de l'invention, la première partie comprend un corps creux d'outil s'étendant longitudinalement entre une première extrémité et une seconde extrémité ouverte et étant apte à venir s'appuyer par sa première extrémité en position fixe contre une surface inférieure de la partie supérieure flexible de la traverse inférieure de baie, la deuxième partie comprend un organe mobile monté coulissant dans le corps creux d'outil à travers la seconde extrémité ouverte du corps creux d'outil entre la position rétractée et ladite au moins une position déployée et étant apte à servir d'appui au corps creux d'outil dans ladite au moins une position déployée de l'organe mobile, le dispositif comprenant en outre des moyens de réglage et de blocage de l'organe mobile dans ladite au moins une position déployée relativement au corps creux d'outil.

Avantageusement, les moyens de réglage et de blocage sont montés solidaires du corps creux d'outil et sont manoeuvrables manuellement.

Selon un mode de réalisation, les moyens de réglage et de blocage peuvent comprendre un levier monté pivotant sur le corps d'outil, le levier comprenant un doigt traversant une ouverture ménagée dans le corps d'outil et destiné à venir s'engager dans un orifice pratiqué dans l'organe mobile venant en regard de ladite ouverture lorsque l'organe mobile est amené dans ladite au moins une position déployée, par quoi l'organe mobile est bloqué dans ladite au moins une position déployée, un pivotement du levier étant apte à mouvoir le doigt vers une position dégagée de l'orifice pratiqué dans l'organe mobile, par quoi l'organe mobile est libre de coulisser dans le corps d'outil.

Selon un mode de réalisation préféré, les moyens de réglage et de blocage de l'organe mobile comprennent une molette taraudée équipant la seconde extrémité ouverte du corps creux d'outil et pouvant tourner relativement au corps creux d'outil autour d'un axe de rotation confondu avec un axe longitudinal du corps creux d'outil, tandis que l'organe mobile comprend une portion filetée apte à être engagée en vissage à travers ladite molette, de sorte qu'une rotation de ladite molette autour de l'axe longitudinal du corps creux d'outil entraîne un déplacement de l'organe mobile selon ledit axe longitudinal.

De préférence, le dispositif de renfort comprend des moyens de fixation temporaire du corps creux d'outil sur la surface inférieure de la partie supérieure flexible de la traverse inférieure de baie.

Selon un mode de réalisation, les moyens de fixation temporaire peuvent comprendre un organe support monté à rotation sur la première extrémité du corps creux d'outil et présentant une surface d'appui engageable de manière amovible contre la surface inférieure de la partie supérieure flexible de la traverse inférieure de baie, la surface d'appui comprenant au moins une partie magnétique rapportée.

Avantageusement, la surface d'appui de l'organe support comprend au moins une rainure de positionnement destinée à coopérer avec une forme complémentaire pratiquée sur la surface inférieure de la partie supérieure flexible de la traverse inférieure de baie, de sorte à assurer un calage de l'organe support relativement à la partie supérieure flexible de la traverse inférieure de baie sur ladite forme complémentaire lorsque la surface d'appui est engagée contre la surface inférieure de la partie supérieure flexible de la traverse inférieure de baie.

De préférence, le dispositif de renfort comprend un organe d'appui monté à rotation sur une extrémité libre de l'organe mobile.

Selon un mode de réalisation, l'organe d'appui peut comprendre une surface d'appui inférieure sensiblement plane et une surface d'appui latérale angulaire aptes à venir en appui respectivement contre une paroi de fond et une paroi latérale d'une boîte à eau se trouvant sensiblement à l'aplomb de la traverse inférieure de baie lorsque l'organe mobile est dans ladite au moins une position déployée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 illustre une vue d'ensemble de profil d'un mode de réalisation du dispositif de renfort conforme à l'invention, dans sa position déployée de maintien de la partie supérieure de la traverse inférieure de baie sur laquelle la bordure inférieure d'un pare-brise est destinée à venir prendre appui ;
- la Figure 2 illustre une vue de détail en perspective d'un mode de réalisation de la partie organe support du dispositif de renfort conforme à l'invention ;
- la Figure 3 illustre une vue de détail en perspective de la partie organe d'appui du dispositif de renfort conforme à l'invention ;
- la Figure 4 illustre un détail d'une variante de réalisation du dispositif de renfort conforme à l'invention.

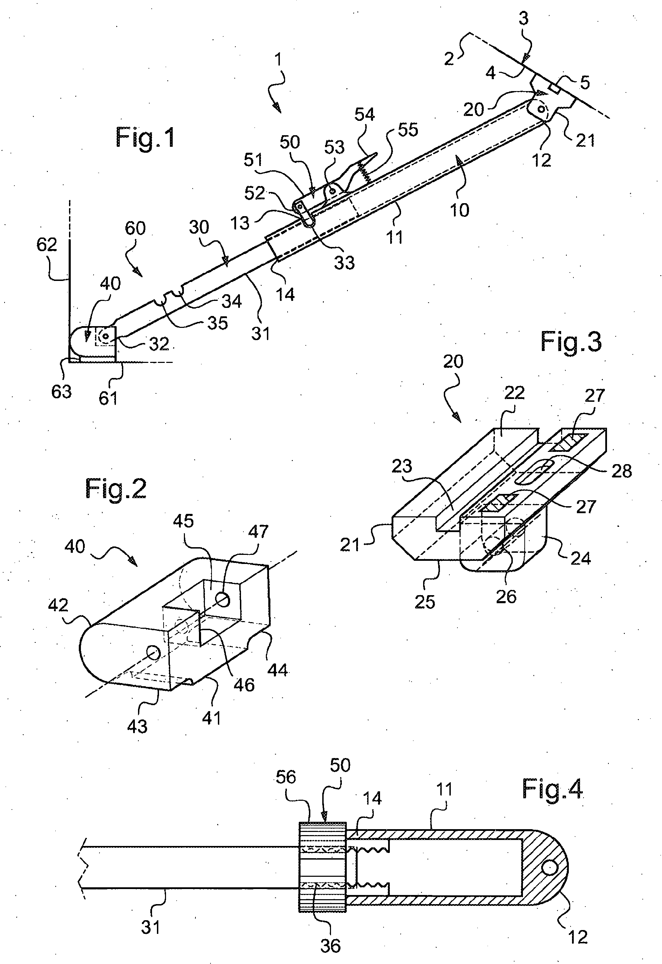

La figure 1 montre une partie supérieure 3 d'une traverse inférieure de baie 2, qui définit la surface d'encollage sur laquelle vient prendre appui la bordure inférieure d'un pare-brise lors de la mise en place de celui-ci. Cette partie supérieure 3 est constituée d'une simple tôle s'étendant transversalement par rapport au véhicule automobile et venant en saillie par rapport au plan vertical formé par le tablier séparant la partie avant de la partie centrale du véhicule automobile, ce qui lui confère ainsi une certaine flexibilité. Pour empêcher cette partie supérieure flexible 3 de la traverse inférieure de baie de fléchir lors des opérations de dépose et de repose du pare-brise, on prévoit de mettre en oeuvre un dispositif 1 de renfort de la traverse inférieure de baie, escamotable, constitué d'une première partie 10 et d'une deuxième partie 30 montées mobiles en coulissement l'une par rapport à l'autre entre une position rétractée et au moins une position déployée dans laquelle elles sont amenées à coopérer pour maintenir la partie supérieure flexible de la traverse inférieure de baie lors de ces opérations.

Selon le mode de réalisation de la figure 1, la première partie 10 comprend un corps creux d'outil 11 s'étendant longitudinalement entre une première extrémité 12 et une seconde extrémité ouverte 14 et étant apte à venir s'appuyer, par sa première extrémité 12, en position fixe contre une surface inférieure 4 de la partie supérieure flexible 3 de la traverse inférieure de baie 2. La deuxième partie 30 du dispositif de renfort comprend un organe mobile 31 monté coulissant dans le corps creux d'outil 11, à travers la seconde extrémité 14 ouverte de celui-ci, entre la position rétractée et la position déployée dans laquelle il est apte à fournir un appui au corps creux d'outil 11, de préférence en fond de boîte à eau 60, qui de par sa constitution et sa forme est particulièrement adaptée à cet usage, comme il sera expliqué plus en détail par la suite. L'organe mobile 31 est donc apte à pouvoir se déplacer axialement relativement au corps creux d'outil 11, selon l'axe longitudinal de ce dernier, pour passer de la configuration rétractée à la position déployée. Le dispositif de renfort 1 comprend en outre des moyens de réglage et de blocage 50 de l'organe mobile 31 dans la position déployée, relativement au corps, creux d'outil. Ces moyens de réglage et de blocage 50 sont montés solidaire du corps creux d'outil 11 et sont prévus pour être manoeuvrables manuellement.

Selon le mode de réalisation de la figure 1, les moyens de réglage et de blocage 50 comprennent un élément de blocage monté solidaire du corps creux d'outil 11 entre une position de libération et une position de blocage où il immobilise l'organe mobile 31 dans sa position déployée dans laquelle l'organe mobile 31 est apte à fournir un appui au corps creux d'outil 11 en fond de boîte à eau 60, tandis que le corps creux d'outil 11 est en appui contre la surface inférieure 4 de la partie supérieure flexible 3 de la traverse inférieure de baie 2.

L'élément de blocage comprend pour ce faire un levier 51 monté par une liaison pivot 53 sur la face externe du corps creux d'outil 11, et comprenant une portion munie d'un doigt 52 apte à traverser une ouverture 13 ménagée dans le corps creux d'outil 11 pour venir s'engager dans un orifice 33 pratiqué dans l'organe mobile 31 venant en regard de cette ouverture 13 lorsque l'organe mobile 31 est amené dans sa position déployée, moyennant quoi l'organe mobile 31 est réglé et maintenu bloqué dans cette position. L'organe mobile 31 peut comprendre plusieurs orifices 34, 35 répartis le long de celui-ci, semblables à l'orifice 33. La position de chaque orifice 33, 34, 35 correspond à une position de blocage différente de l'organe mobile par rapport au corps creux d'outil, permettant ainsi de régler plusieurs positions déployées respectives susceptibles de s'adapter à des modèles différents de véhicule présentant des distances différentes entre le fond de la boîte à eau sur lequel l'organe mobile est destiné à former appui et la surface inférieure de la partie supérieure de la traverse inférieure de baie sur laquelle le corps d'outil est destiné à venir en prise.

Le levier 51 comprend encore une portion d'actionnement 54, opposée à la portion d'accueil du doigt 52. Un appui sur la portion d'actionnement 54 permet de faire pivoter le levier 51 autour de la liaison pivot 53 pour dégager le doigt 52 de l'orifice 33 pratiqué dans l'organe mobile 31, moyennant quoi l'organe mobile 31 est libre de coulisser à l'intérieur du corps creux d'outil 11. Le levier 51 est sollicité vers sa position de blocage de l'organe mobile par un ressort de rappel 55 s'étendant entre la portion d'actionnement 54 du levier et la face externe du corps d'outil 11.

Selon une variante de réalisation du dispositif de renfort 1 illustrée à la figure 4, l'organe mobile 31 est constitué d'une tige filetée comportant une portion filetée 36, engagée en vissage à travers une molette 56 taraudée montée au niveau de l'extrémité ouverte 14 du corps creux d'outil 11 et pouvant tourner relativement au corps creux d'outil 11 autour d'un axe de rotation, confondu avec l'axe longitudinal du corps creux d'outil 11.

L'organe mobile 31 peut ainsi être déplacé axialement relativement au corps creux d'outil 11 grâce à la portion filetée 36 sur laquelle est vissée la molette 56 montée solidaire du corps d'outil, une action manuelle sur la molette 56 permettant de transformer une rotation de celle-ci autour de l'axe longitudinal du corps creux d'outil 11 en un déplacement de l'organe mobile 31 Selon cet axe longitudinal.

Une fois l'organe 31 mobile réglé en position déployée, la friction entre la portion filetée 36 de l'organe mobile et la molette 56 exclut tout déplacement de l'organe mobile 31 relativement au corps creux d'outil 11. La molette 56 joue donc à la fois un rôle de réglage de l'organe mobile en position déployée et de blocage de cet organe dans cette position relativement au corps creux d'outil.

On pourra avantageusement mettre à disposition des tiges filetées de différentes longueurs permettant d'adapter le dispositif de renfort 1 à différents modèles de véhicule présentant des distances différentes entre le fond de la boîte à eau et la surface inférieure de la partie supérieure flexible de la traverse inférieure de baie.

Par ailleurs, la liaison du corps creux d'outil 11 au niveau de la surface inférieure 4 de la partie supérieure 3 de la traverse inférieure de baie 2 peut être assurée par des moyens 20 de fixation temporaire du corps creux d'outil 11 sur cette surface inférieure 4, pouvant se présenter sous la forme d'un organe support 21 monté à rotation sur l'extrémité 12 du corps creux d'outil 11, prévu pour être positionnée du côté de la partie supérieure 3 de la traverse inférieure de baie 2.

Selon le mode de réalisation de la figure 3, l'organe support 21 présente une première surface d'appui 22, sensiblement plane, engageable de manière amovible contre la surface inférieure 4 de la partie supérieure 3 flexible de la traverse inférieure de baie 2. La surface d'appui 22 est rendue magnétique en y rapportant des inserts magnétiques 27, au nombre de deux sur l'exemple de la figure 3. Le caractère magnétique de la surface d'appui 22 de l'organe support 21 permet de l'assembler fermement à la surface inférieure 4 de la partie supérieure 3 flexible de la traverse inférieure de baie 2 contre laquelle elle est destinée à venir prendre appui, assurant ainsi la tenue d'ensemble du dispositif de renfort 1. La surface d'appui 22 magnétique de l'organe support 21 comprend en outre au moins une rainure de positionnement 23 destinée à coopérer avec au moins une forme complémentaire 5 de la surface inférieure 4, constituée d'un embouti négatif de tôlerie de la partie supérieure flexible 3 de la traverse inférieure de baie 2, de sorte à assurer un positionnement et un calage de l'organe support 21 relativement à la partie supérieure flexible 3 de la traverse inférieure de baie sur cet embouti, lorsque la surface d'appui 22 magnétique est engagée contre la surface inférieure 4 de la partie supérieure flexible 3 de la traverse inférieure de baie. Selon les modèles de véhicules, un usinage 28 sphérique pourra être ménagé en plus de la rainure 23 sur la surface d'appui 22, destiné également à coopérer avec un embouti négatif de tôlerie correspondant de la partie supérieure flexible 3 de la traverse inférieure de baie 2, pour participer au calage.

Toujours en référence au mode de réalisation de la figure 3, l'organe support 21 comprend un organe de liaison 24 sur l'extrémité 12 du corps creux d'outil 11. L'organe de liaison 24 fait saillie sur une surface 25 de l'organe support opposée à la surface d'appui magnétique 22 et est destiné à être monté dans un évidement correspondant prévu à l'extrémité 12 du corps d'outil 11 par l'intermédiaire d'un axe de rotation qui s'engage, au travers d'un alésage débouchant 26 réalisé dans l'organe de liaison, dans des logements latéraux correspondants pratiqués dans l'évidement.

Le dispositif de renfort 1 comprend préférentiellement un organe d'appui 40 monté à rotation sur une extrémité libre 32 de l'organe mobile 31, pour favoriser la prise d'appui en fond de boîte à eau 60, disposée sensiblement à l'aplomb de la traverse inférieure de baie 2 au niveau du tablier du véhicule automobile. Il s'agit en effet d'une structure solide et résistante facilement accessible, qui est donc particulièrement adaptée à la prise d'appui pour le dispositif de renfort de la traverse inférieure de baie.

En référence au mode de réalisation de la figure 2, l'organe d'appui 40 comprend un évidement 45 dans lequel est montée l'extrémité libre 32 de l'organe mobile 31 par l'intermédiaire d'un axe de rotation qui s'engage dans des logements latéraux 46, 47 pratiqués dans l'évidement 45.

L'organe d'appui 40 comprend une surface d'appui inférieure 41 sensiblement plane destinée à venir en appui contre une paroi de fond 61 de la boîte à eau 60. Il comprend également, sur sa partie arrière, une surface d'appui latérale 42 angulaire, destinée à venir en contact avec une paroi latérale 62 de la boîte à eau, confondue avec une partie de la cloison avant du tablier formant la cloison de chauffage, lorsque l'organe mobile 31 est amené dans sa position déployée. La surface d'appui latérale 42 est par exemple conformée de sorte à accepter des angles d'ouverture/fermeture de tôlerie de +45° à -45°. La surface d'appui inférieure 41 de l'organe d'appui 40 comprend préférentiellement des zones échancrées 43, 44 sur deux bords latéraux opposés de la surface d'appui inférieure 41, destinées à coopérer avec des formes complémentaires pratiquées sur la paroi de fond 61 de la boîte à eau 60, constitués d'emboutis de tôlerie 63, permettant d'assurer un calage de l'organe d'appui 40 relativement à la paroi de fond 61 sur les emboutis de tôlerie 63, lorsque la surface d'appui inférieure 43 de l'organe d'appui vient en appui contre la paroi de fond 61.

Le dispositif de renfort 1 tel qu'il vient d'être décrit est plus particulièrement destiné à être employé en après-vente, lors des opérations de dépose et repose du pare-brise du véhicule automobile. Ainsi, après que l'ensemble, grille d'auvent/écope sous grille d'auvent recouvrant la boîte à eau se trouvant dessous ait été retiré, le dispositif de renfort 1 pourra être positionné avant que l'opérateur découpe le cordon de colle en bordure inférieure du pare-brise et dépose du pare-brise. Pour ce faire, le dispositif de renfort 1 est mis en place en positionnant la surface d'appui magnétique 22 de l'organe support 21 sous la partie supérieure flexible 3 de la traverse inférieure de baie 2, à l'aide du repère de positionnement et de calage constitué par l'embouti de tôlerie 5. Puis l'organe mobile 31 est déployé de sa position rétractée dans le corps d'outil 11 vers sa position déployée, tout en positionnant l'organe d'appui 40 en fond 61 de boîte à eau, calé sur les deux emboutis de tôlerie 63. Enfin, l'organe mobile 31 est bloqué en position déployée par l'intermédiaire des moyens de blocage 50. Ainsi, mis en place, le dispositif de renfort 1 permet d'étayer la partie supérieure flexible de la traverse inférieure de baie et d'assurer en conséquence la géométrie de celle-ci au nominal. Le dispositif de renfort sera maintenu en place durant les opérations de dépose et de repose du pare-brise, ainsi que pendant la durée de réticulation de la colle.

La configuration du dispositif de renfort en deux parties mobiles l'une par rapport à l'autre entre une position rétractée et une ou plusieurs positions déployées permet avantageusement une mise en place très aisée et, au surplus, qui ne nécessite aucun outil.

Les différents éléments constitutifs du dispositif de renfort pourront être réalisés en métal ou, de préférence, en matériau composite.

## Revendications

1. Dispositif (1) de renfort d'une traverse inférieure de baie (2) présentant une partie supérieure (3) flexible apte à se déformer et conçue pour recevoir une bordure inférieure de pare-brise de véhicule automobile appliquée à force sur ladite partie supérieure flexible lors de la mise en place du pare-brise sur le véhicule automobile, **caractérisé en ce qu'**il comprend des moyens amovibles de raidissement de la traverse inférieure de baie comprenant au moins une première (10) et une deuxième (30) partie mobiles en coulissement l'une par rapport à l'autre entre une position rétractée et au moins une position déployée dans laquelle lesdites première (10) et deuxième (30) parties sont aptes à coopérer pour maintenir la partie supérieure flexible (3) de la traverse inférieure de baie lors de l'application à force du pare-brise.

2. Dispositif selon la revendication 1, **caractérisé en ce que** la première partie (10) comprend un corps creux d'outil (11) s'étendant longitudinalement entre une première extrémité (12) et une seconde extrémité ouverte (14) et étant apte à venir s'appuyer par sa première extrémité (12) en position fixe contre une surface inférieure (4) de la partie supérieure (3) flexible de la traverse inférieure de baie (2), la deuxième partie (30) comprend un organe mobile (31) monté coulissant dans le corps creux d'outil (11) à travers la seconde extrémité ouverte (14) du corps creux d'outil (11) entre la position rétractée et ladite au moins une position déployée et étant apte à servir d'appui au corps creux d'outil (11) dans ladite au moins une position déployée de l'organe mobile (31), le dispositif comprenant en outre des moyens de réglage et de blocage (50) de l'organe mobile (31) dans ladite au moins une position déployée relativement au corps creux d'outil.

3. Dispositif selon la revendication 2, caractérisé en en ce que les moyens de réglage et de blocage (50) sont montés solidaires du corps creux d'outil (11) et sont manoeuvrables manuellement.

4. Dispositif selon la revendication 2 ou 3, **caractérisé en ce que** les moyens de réglage et de blocage (50) comprennent un levier (51) monté pivotant sur le corps d'outil (11), le levier comprenant un doigt (52) traversant une ouverture (13) ménagée dans le corps d'outil (11) et destiné à venir s'engager dans un orifice (33) pratiqué dans l'organe mobile (31) venant en regard de ladite ouverture (13) lorsque l'organe mobile (31) est amené dans ladite au moins une position déployée, par quoi l'organe mobile (31) est bloqué dans ladite au moins une position déployée, un pivotement du levier (51) étant apte à mouvoir le doigt (52) vers une position dégagée de l'orifice (33) pratiqué dans l'organe mobile (31), par quoi l'organe mobile est libre de coulisser dans le corps d'outil.

5. Dispositif selon la revendication 2 ou 3, **caractérisé en ce que** les moyens de réglage et de blocage (50) comprennent une molette (56) taraudée équipant la seconde extrémité ouverte (14) du corps creux d'outil (12) et pouvant tourner relativement au corps creux d'outil (11) autour d'un axe de rotation confondu avec un axe longitudinal du corps creux d'outil (11), tandis que l'organe mobile (31) comprend une portion filetée (36) apte à être engagée en vissage à travers ladite molette (56) de sorte qu'une rotation de ladite molette (56) autour de l'axe longitudinal du corps creux d'outil (11) entraîne un déplacement de l'organe mobile (31) selon ledit axe longitudinal.

6. Dispositif selon l'une quelconque des revendications 2 à 5, **caractérisé en ce qu'**il comprend des moyens (20) de fixation temporaire du corps creux d'outil sur la surface inférieure (4) de la partie supérieure (3) flexible de la traverse inférieure de baie (2).

7. Dispositif selon la revendication 6, **caractérisé en ce que** les moyens (20) de fixation temporaire comprennent un organe support (21) monté à rotation sur la première extrémité (12) du corps creux d'outil (11) et présentant une surface d'appui (22) engageable de manière amovible contre la surface inférieure (4) de la partie supérieure (3) flexible de la traverse inférieure de baie (2), la surface d'appui (22) comprenant au moins une partie magnétique rapportée (27).

8. Dispositif selon la revendication 7, **caractérisé en ce que** la surface d'appui (22) de l'organe support (21) comprend au moins une rainure de positionnement (23) destinée à coopérer avec une forme complémentaire (5) pratiquée sur la surface inférieure (4) de la partie supérieure flexible (3) de la traverse inférieure de baie (2), de sorte à assurer un calage de l'organe support (21) relativement à la partie supérieure flexible de la traverse inférieure de baie sur ladite forme complémentaire (5) lorsque la surface d'appui (22) est engagée contre la surface inférieure de la partie supérieure flexible de la traverse inférieure de baie.

9. Dispositif selon l'une quelconque des revendications 2 à 8, **caractérisé en ce que** qu'il comprend un organe d'appui (40) monté à rotation sur une extrémité libre (32) de l'organe mobile (31).

10. Dispositif selon la revendication 9, **caractérisé en ce que** l'organe d'appui (40) comprend une surface d'appui inférieure (41) sensiblement plane et une surface d'appui latérale (42) angulaire aptes à venir en appui respectivement contre une paroi de fond (61) et une paroi latérale (62) d'une boîte à eau (60) se trouvant sensiblement à l'aplomb de la traverse inférieure de baie (2) lorsque l'organe mobile (31) est dans ladite au moins une position déployée.

## Patentansprüche

1. Vorrichtung (1) zur Verstärkung eines unteren Rahmenquerträgers (2), der einen oberen biegsamen Teil (3) aufweist, welcher sich verformen kann und konzipiert ist, einen unteren Rand einer Windschutzscheibe eines Kraftfahrzeugs aufzunehmen, der beim Einsetzen der Windschutzscheibe in das Kraftfahrzeug auf den oberen biegsamen Teil presseingepasst wird, **dadurch gekennzeichnet, dass** sie entfernbare Einrichtungen zur Versteifung des unteren Rahmenquerträgers aufweist, die mindestens einen ersten (10) und einen zweiten (30) Teil enthalten, die zwischen einer eingezogenen und mindestens einer ausgezogenen Stellung zueinander gleitend beweglich sind, in der der erste (10) und der zweite (30) Teil zusammenwirken können, um den biegsamen oberen Teil (3) des unteren Rahmenquerträgers beim Presseinpassen der Windschutzscheibe zu halten.

2. Vorrichtung nach Anspruch 1, **dadurch gekennzeichnet, dass** der erste Teil (10) einen Werkzeughohlkörper (11) enthält, der sich in Längsrichtung zwischen einem ersten Ende (12) und einem zweiten offenen Ende (14) erstreckt und sich mit seinem ersten Ende (12) in ortsfester Stellung gegen eine untere Fläche (4) des biegsamen oberen Teils (3) des unteren Rahmenquerträgers (2) anlegen kann, der zweite Teil (30) ein bewegliches Element (31) enthält, das zwischen der eingezogenen Stellung und der mindestens einen ausgezogenen Stellung durch das zweite offene Ende (14) des Werkzeughohlkörpers (11) im Werkzeughohlkörper (11) gleitend montiert ist und in der mindestens einen ausgezogenen Stellung des beweglichen Elements (31) als Auflage für den Werkzeughohlkörper (11) dienen kann, wobei die Vorrichtung außerdem Einstell- und Blockiereinrichtungen (50) des beweglichen Elements (31) in der mindestens einen ausgezogenen Stellung bezüglich des Werkzeughohlkörpers enthält.

3. Vorrichtung nach Anspruch 2, **dadurch gekennzeichnet, dass** die Einstell- und Blockiereinrichtungen (50) fest mit dem Werkzeughohlkörper (11) verbunden montiert und manuell betätigbar sind.

4. Vorrichtung nach Anspruch 2 oder 3, **dadurch gekennzeichnet, dass** die Einstell- und Blockiereinrichtungen (50) einen schwenkbar auf den Werkzeugkörper (11) montierten Hebel (51) enthalten, wobei der Hebel einen Finger (52) enthält, der eine im Werkzeugkörper (11) ausgebildete Öffnung (13) durchquert und dazu bestimmt ist, sich in eine im beweglichen Element (31) hergestellte Öffnung (33) einzufügen, die der Öffnung (13) gegenüberliegt, wenn das bewegliche Element (31) in die mindestens eine ausgezogene Stellung gebracht wird, wodurch das bewegliche Element (31) in der mindestens einen ausgezogenen Stellung blockiert wird, wobei ein Schwenken des Hebels (51) den Finger (52) in eine freigegebene Stellung der im beweglichen Element (31) hergestellten Öffnung (33) bewegen kann, wodurch das bewegliche Element frei im Werkzeugkörper gleiten kann.

5. Vorrichtung nach Anspruch 2 oder 3, **dadurch gekennzeichnet, dass** die Einstell- und Blockiereinrichtungen (50) ein Rädchen mit Innengewinde (56) enthalten, das das zweite offene Ende (14) des Werkzeughohlkörpers (11) bestückt und sich bezüglich des Werkzeughohlkörpers (11) um eine Drehachse drehen kann, die mit einer Längsachse des Werkzeughohlkörpers (11) zusammenfällt, während das bewegliche Element (31) einen Gewindeabschnitt (36) enthält, der durch Verschrauben durch das Rädchen (56) hindurch eingeführt werden kann, so dass eine Drehung des Rädchens (56) um die Längsachse des Werkzeughohlkörpers (11) eine Verschiebung des beweglichen Elements (31) gemäß der Längsachse bewirkt.

6. Vorrichtung nach einem der Ansprüche 2 bis 5, **dadurch gekennzeichnet, dass** sie Einrichtungen (20) zur vorübergehenden Befestigung des Werkzeughohlkörpers an der unteren Fläche (4) des biegsamen oberen Teils (3) des unteren Rahmenquerträgers (2) enthält.

7. Vorrichtung nach Anspruch 6, **dadurch gekennzeichnet, dass** die Einrichtungen (20) zur vorübergehenden Befestigung ein Trägerelement (21) enthalten, das drehbar auf das erste Ende (12) des Werkzeughohlkörpers (11) montiert ist und eine Auflagefläche (22) aufweist, die entfernbar gegen die untere Fläche (4) des biegsamen oberen Teils (3) des unteren Rahmenquerträgers (2) in Eingriff gebracht werden kann, wobei die Auflagefläche (22) mindestens einen angesetzten magnetischen Teil (27) enthält.

8. Vorrichtung nach Anspruch 7, **dadurch gekennzeichnet, dass** die Auflagefläche (22) des Trägerelements (21) mindestens eine Positionierrille (23) enthält, die dazu bestimmt ist, mit einer komplementären Form (5) zusammenzuwirken, die an der unteren Fläche (4) des biegsamen oberen Teils (3) des unteren Rahmenquerträgers (2) hergestellt ist, um eine Verkeilung des Trägerelements (21) bezüglich des biegsamen oberen Teils des unteren Rahmenquerträgers auf der komplementären Form (5) zu gewährleisten, wenn die Auflagefläche (22) gegen die untere Fläche des biegsamen oberen Teils des unteren Rahmenquerträgers in Eingriff ist.

9. Vorrichtung nach einem der Ansprüche 2 bis 8, **dadurch gekennzeichnet, dass** sie ein Auflageelement (40) enthält, das drehbar auf ein freies Ende (32) des beweglichen Elements (31) montiert ist.

10. Vorrichtung nach Anspruch 9, **dadurch gekennzeichnet, dass** das Auflageelement (40) eine im Wesentlichen ebene untere Auflagefläche (41) und eine winkelförmige seitliche Auflagefläche (42) enthält, die gegen eine Bodenwand (61) bzw. eine Seitenwand (62) eines Wasserkastens (60) in Auflage kommen können, der sich im Wesentlichen lotrecht zum unteren Rahmenquerträger (2) befindet, wenn das bewegliche Element (31) in der mindestens einen ausgezogenen Stellung ist.

## Claims

1. Device (1) for reinforcing a window opening lower crossmember (2) having a deformable flexible upper part (3) designed to receive a motor vehicle windscreen lower edge force-fitted to the said flexible upper part during the installation of the windscreen on the motor vehicle, **characterized in that** it comprises removable means for stiffening the window opening lower crossmember, comprising at least a first (10) and a second (30) part which are slidable with respect to one another between a retracted position and at least one extended position in which the said first (10) and second (30) parts are able to cooperate in order to retain the flexible upper part (3) of the window opening lower crossmember during the force-fitting of the windscreen.

2. Device according to Claim 1, **characterized in that** the first part (10) comprises a hollow tool body (11) extending longitudinally between a first end (12) and a second open end (14) and being able to bear by its first end (12) in a fixed position against a lower surface (4) of the flexible upper part (3) of the window opening lower crossmember (2), the second part (30) comprises a movable member (31) slidably mounted in the hollow tool body (11) through the second open end (14) of the hollow tool body (11) between the retracted position and the said at least one extended position and being able to serve as a support for the hollow tool body (11) in the said at least one extended position of the movable member (31), the device additionally comprising means (50) for adjusting and immobilizing the movable member (31) in the said at least one extended position relative to the hollow tool body.

3. Device according to Claim 2, **characterized in that** the adjusting and immobilizing means (50) are mounted securely to the hollow tool body (11) and can be operated manually.

4. Device according to Claim 2 or 3, **characterized in that** the adjusting and immobilizing means (50) comprise a lever (51) pivotably mounted on the tool body (11), the lever comprising a finger (52) passing through an opening (13) made in the tool body (11) and intended to engage in an orifice (33) formed in the movable member (31) which comes to be opposite the said opening (13) when the movable member (31) is brought into the said at least one extended position, whereby the movable member (31) is immobilized in the said at least one extended position, a pivoting of the lever (51) being able to move the finger (52) towards a position in which it is disengaged from the orifice (33) formed in the movable member (31), whereby the movable member is free to slide in the tool body.

5. Device according to Claim 2 or 3, **characterized in that** the adjusting and immobilizing means (50) comprise a tapped thumbwheel (56) equipping the second open end (14) of the hollow tool body (11) and being able to rotate relative to the hollow tool body (11) about an axis of rotation coincident with a longitudinal axis of the hollow tool body (11), whereas the movable member (31) comprises a threaded portion (36) able to be engaged by screwing through the said thumbwheel (56) such that a rotation of the said thumbwheel (56) about the longitudinal axis of the hollow tool body (11) moves the movable member (31) along the said longitudinal axis.

6. Device according to any one of Claims 2 to 5, **characterized in that** it comprises means (20) for temporarily fixing the hollow tool body on the lower surface (4) of the flexible upper part (3) of the window opening lower crossmember (2).

7. Device according to Claim 6, **characterized in that** the temporary fixing means (20) comprise a support member (21) rotatably mounted on the first end (12) of the hollow tool body (11) and having a bearing surface (22) which can be engaged in a removable manner against the lower surface (4) of the flexible upper part (3) of the window opening lower crossmember (2), the bearing surface (22) comprising at least one attached magnetic part (27).

8. Device according to Claim 7, **characterized in that** the bearing surface (22) of the support member (21) comprises at least one positioning groove (23) intended to cooperate with a complementary shape (5) formed on the lower surface (4) of the flexible upper part (3) of the window opening lower crossmember (2), so as to wedge the support member (21) relative to the flexible upper part of the window opening lower crossmember on the said complementary shape (5) when the bearing surface (22) is engaged against the lower surface of the flexible upper part of the window opening lower crossmember.

9. Device according to any one of Claims 2 to 8, **characterized in that** it comprises a bearing member (40) rotatably mounted on a free end (32) of the movable member (31).

10. Device according to Claim 9, **characterized in that** the bearing member (40) comprises a substantially flat lower bearing surface (41) and an angular lateral bearing surface (42) which are able to bear respectively against a bottom wall (61) and a lateral wall (62) of a water box (60) situated substantially in vertical alignment with the window opening lower crossmember (2) when the movable member (31) is in the said at least one extended position.
